# NEUE EUROPÄISCHE PATENTSCHRIFT

(11) **EP 2 581 673 B2**
(45) Veröffentlichungstag und Bekanntmachung des Hinweises auf die Entscheidung über den Einspruch: **21.07.2021**
(45) Hinweis auf die Patenterteilung: 29.11.2017
(21) Anmeldenummer: 12186859.0
(22) Anmeldetag: 01.10.2012
(51) Int. Cl.: F24D 19/10, G05D 23/00, G05D 23/19

(54) **Verfahren zur Steuerung einer Heizungsanlage und Heizungssteuerung**
Method for controlling a heating system and heating controls
Procédé destiné à la commande d'une installation de chauffage et commande de chauffage

(30) Priorität: 14.10.2011 DE 102011116179
(43) Veröffentlichungstag der Anmeldung: 17.04.2013
(73) Patentinhaber: METRONA Union GmbH, 81379 München (DE)
(72) Erfinder: Schröder, Franz, 82054 Sauerlach (DE)
(74) Vertreter: Prinz & Partner mbB

(56) Entgegenhaltungen:
- EP-A1- 1 645 928
- EP-A1- 1 884 845
- EP-A1- 2 009 536
- EP-A2- 2 182 297
- WO-A2-03/052536
- DE-A1- 3 103 911
- DE-A1- 3 103 911
- S. BAUMGARTH: "Regelungsstrategien fÃ Â Ã Â Ã Â Ã Â¼r Einzelraumregelung", atp - Automatisierungstechnische Praxis, vol. 37, no. 1, 1995, pages 29-35,
- A. KAHLER et al.: "Heizenergieeinsparung mit Vorlauftemperaturadaption", HLH - Luftung / Klima / Heizung / SanitarÂ Gebaudetechnik, 2008, pages 1-8,
- D. PFANNENSTIEL: "Einsatz adaptiver und fuzzy-basierter Regelungsstrategien in der Heizungstechnik", atp - Automatisierungstechnische Praxis, vol. 37, no. 1, 1995, pages 42-49, XP000481538,

## Beschreibung

Die Erfindung betrifft ein Verfahren zur Steuerung einer Heizungsanlage. Die Erfindung betrifft ferner eine Heizungssteuerung zur Durchführung dieses Verfahrens.

Im Rahmen der Energieeinspardebatte wird nach Wegen gesucht, das Heizverhalten von Wohnungs- und Liegenschaftsnutzern möglichst hin zu einer höheren Energieeffizienz zu beeinflussen. Als Maßstab für ein "richtiges" Heizverhalten gilt dabei allgemein die energetisch optimierte Bereitstellung eines mittelfeuchten Raumklimas mit einer Bedarfstemperatur zwischen 20 und 21 °C im gesamten Wohnbereich. Energetisch optimiert bedeutet in diesem Zusammenhang, dass die Übertemperaturen der Heizflächen bei maximalem Volumendurchsatz so niedrig wie möglich gehalten werden, um Verluste bei der Wärmeerzeugung und der Wärmeübergabe möglichst zu minimieren. Ablüftung von Wärme - insbesondere bei stärkeren regelungsbedingten zyklischen Schwankungen der Innenraumtemperatur - soll auf ein notwendiges Maß reduziert werden. Entsprechende Szenarien dienen als Bewertungsmaßstab für die Abschätzung von Energieeinsparpotentialen.

Die heute üblichen Heizungsanlagen und -steuerungen ermöglichen die Bereitstellung eines energetisch optimierten Raumklimas, sind jedoch in vielerlei Hinsicht limitiert: Bei Auslegung und Betrieb der Heizanlage wird eine einheitliche Bedarfstemperatur in allen Wohnbereichen vorausgesetzt. Es werden nur technisch-energetische Parameter berücksichtigt. Das Gebäude wird nur integral als Ganzes betrachtet. (Einzelne) Außentemperaturfühler sind häufig nicht repräsentativ genug für die maßgeblichen Wärmeströme, die sich im Gebäude einstellen können. Heiz- und Lüftungsverhalten und die zugrundlegendenden Bedürfnisse der Nutzer werden ignoriert. Thermische Zeitkonstanten der Räumlichkeiten und deren Wechselwirkung mit temporären weiteren Energieeinträgen (Sonneneinstrahlung, etc.) werden nicht abgebildet.

In der EP 2 009 536 A1 sind ein Verfahren und eine Vorrichtung zur Einstellung der Heizleistungsreserve in einem Heizkreis einer Heizungsanlage beschrieben. Für mehrere Heizkörper eines Heizkreises der Heizungsanlage wird jeweils eine Heizkörper-Heizleistungsreserve aus für jeden der Heizkörper gemessenen Temperaturen bestimmt. Aus den einzelnen Heizkörper-Heizleistungsreserven wird mittels gewichteter Mittelwertbildung oder Anwendung einer Fuzzy-Logic eine Heizkreis-Heizleistungsreserve als Regelgröße ermittelt. Ferner wird eine Soll-Heizleistungsreserve als Sollwert der Heizkreis-Heizleistungsreserve vorgegeben. Aus der Abweichung der Regelgröße Heizkreis-Heizleistungsreserve vom Sollwert Soll-Heizleistungsreserve wird eine Führungs- oder Korrekturgröße zur Einwirkung auf den Heizkreis ermittelt, um eine optimierte Heizungsregelung zu schaffen. Als Führungsgröße wird der Sollwert der Vorlauftemperatur und/oder des Massenstromes verwendet.

Die WO 03/052536 A2 offenbart ein Verfahren und eine Vorrichtung zur Adaption der Wärmeleistung in Heizungsanlagen mittels einer Wärmeleistungsregelung der Heizungsanlage durch Variation von Vorlauftemperatur und/oder Massenstrom. Um die Wärmeleistung besser an den tatsächlichen Wärmebedarf anzupassen, ist ein Versorgungszustandsadaptionsmodul vorgesehen, wodurch ein den Wärmebedarf der Räume berücksichtigender Heizkreis oder Gebäudeversorgungszustand als Regelgröße mit einem vorgebbaren Sollwert für den Heizkreis- oder Gebäudeversorgungszustand verglichen und daraus ein Sollwert und/oder Korrekturwert für die Wärmeleistungsregelung ermittelt wird. Die Raumversorgungszustände werden in Über- und Unterversorgungszustände eingeteilt und separat gewichtet gemittelt. Die Raumversorgungszustände werden mit einer Fuzzy-Zugehörigkeitsfunktion bewertet, und die Regelgröße Heizkreis- oder Gebäudeversorgungszustand wird durch nachfolgende Fuzzy-Inferenzbildung und Defuzzyfizierung mittels einer Schwerpunktmethode berechnet. In einem P-, PI-, PID- oder PI-Zustands-Regler mit parameteradaptiven Algorithmen der Versorgungszustandsregelung wird aus der Regelabweichung zwischen einem vorgebbaren Sollwert des Heizkreis- oder Gebäudeversorgungszustands und dem ermittelten Wert des Heizkreis- oder Gebäudeversorgungszustands als Sollwert für die Wärmeleistungsregelung ein Vorlauftemperatur-oder Massenstromsollwert ermittelt.

Aufgabe der Erfindung ist es, eine effiziente, besser auf den individuellen Bedarf der Nutzer abgestellte Heizungssteuerung zu schaffen.

Gelöst wird diese Aufgabe durch ein Verfahren mit den Merkmalen des Anspruchs 1. Vorteilhafte und zweckmäßige Ausgestaltungen des erfindungsgemäßen Verfahrens sind in den zugehörigen Unteransprüchen angegeben.

Unter repräsentativen Werten sind hier entweder die Heizflächen- oder Heizmediumtemperatur, die Raumtemperatur und die (relative) Wärmeabgabe selbst, oder Werte zu verstehen, die direkt in Zusammenhang mit diesen Größen stehen und eindeutige Rückschlüsse auf diese Größen zulassen.

Die Erfindung beruht auf folgender Erkenntnis: Meistens wird übersehen, dass sich - auch bei energiebewussten Wohnungsnutzern -das tatsächliche, der körperlichen Befindlichkeit entsprechende Heizverhalten nur schwer mit den eingangs genannten Vorgaben in Einklang bringen lässt. Viele Menschen schätzen Temperaturkontraste innerhalb ihres Wohnbereiches. So werden Schlafzimmer, Arbeitsräume und Kinderzimmer als kühle bis kalte Bereiche bevorzugt, während Badezimmer oft überheizt werden. Der Mensch bevorzugt offenbar wenige warme Bereiche im Wohnbereich, an denen er sich physisch fühlbar aufwärmen kann. Die Heizflächen in diesen warmen Bereichen benötigen typischerweise Temperaturen von nicht weniger als 40 bis 50 °C, um den besagten Wohlfühleffekt auszulösen. In denjenigen Räumen, in denen sich die Nutzer länger aufhalten, wird aber auch häufiger abgelüftet, weil durch die personenanwesenheitsbedingte CO₂-Anreicherung ein Bedarf nach "frischer Luft" besteht.

Die Praxis zeigt, dass gerade in energetisch ineffizienten Wohngebäuden mit hohem Heizenergieverbrauch mit höheren Temperaturkontrasten gelebt wird, wobei einzelne, weniger bewohnte und praktisch unbeheizte Räume als Isolationsbereich gegenüber kalten Außentemperaturen fungieren. Dies zeigt sich z. B. dadurch, dass eine Vielzahl gemäß theoretischen Bedarfsrechnungen energieineffizienter und sanierungsbedürftiger Gebäude, die einen spezifischen Energieverbrauch von über 250 kWh/m²/a erwarten lassen, in der Praxis dennoch unter 200 kWh/m²/a liegen. Andererseits erreichen moderne und modern sanierte Gebäude in ihrer Mehrzahl selten einen spezifischen Energieverbrauch unter 100 kWh/m²/a, obwohl entsprechend den Baustandards ab 1995 die Werte durchgehend zwischen 50 und 80 kWh/m²/a liegen sollten. Dies lässt den Schluss zu, dass gut gedämmte Gebäude mit einheitlich aufgeheiztem Innenraumbereich nicht unbedingt das optimale Wohnraumklima repräsentieren, weil in dieser Gebäudeklasse wahrscheinlich überdurchschnittlich aktiv abgelüftet wird. Unbehaglichkeitsempfindungen und Müdigkeitwerden häufiger gerade aus überdurchschnittlich gut gedämmten Wohnbereichen berichtet. Das Verlangen nach "frischer Luft" dürfte also ein bio-dynamisch sehr wichtiger Parameter für das reale Heizverhalten sein.

Insgesamt lässt sich aus diesen Betrachtungen schließen, dass angenehmes Wohnen eher durch Unterschiede und Wechsel der Umgebungstemperatur bestimmt ist als durch eine allzeit gleichmäßige Temperierung des gesamten Wohnbereiches. Diesen Bedürfnissen trägt das erfindungsgemäße Verfahren zur Steuerung einer Heizungsanlage Rechnung.

Gemäß einer bevorzugten Ausführungsform der Erfindung werden ausschließlich die repräsentativen Werte der vorrangigen Heizflächen für das Einstellen der Parameter herangezogen. Die Werte der übrigen Heizflächen werden aus den oben genannten Gründen nicht berücksichtigt, wodurch sich die Auswertung vereinfacht und auf eine Gewichtung der Heizflächen verzichtet werden kann.

Vorzugsweise basiert das Auswählen der Gruppe von vorrangigen Heizflächen auf Fuzzy-Logik. Die dadurch berücksichtigten Unschärfen bzw. Unsicherheiten ermöglichen eine flexiblere und den realen Umständen besser entsprechende Qualifizierung der Heizflächen.

Bei der Auswahl der Gruppe von vorrangigen Heizflächen wird als wesentliches Kriterium insbesondere eine gemittelte Wärmeabgabe der Heizflächen berücksichtigt.

In die Auswahl der vorrangigen Heizflächen werden insbesondere diejenigen Heizflächen einbezogen, die für mehr als die Hälfte, weiter vorzugsweise mehr als zwei Drittel der gesamten Wärmeabgabe aller Heizflächen des Heizkreises verantwortlich sind.

Gemäß einem besonderen Aspekt des erfindungsgemäßen Verfahrens wird bezüglich derjenigen Räume, in denen sich die vorrangigen Heizflächen befinden, aus den erfassten repräsentativen Werten eine Mindestraumtemperatur bestimmt, und die Vorlauftemperatur und/oder die Durchflussvolumina und/oder die Kesselheizintervalle werden innerhalb eines regulären Betriebszeitraums der Heizanlage nur so weit reduziert, dass die Mindestraumtemperatur in diesem Betriebszeitraum jederzeit erreicht und gehalten werden kann. Ein regulärer Betriebszeitraum soll als basierend auf einer normalen Nutzung der entsprechenden Liegenschaft verstanden werden, was z. B. längere Abwesenheiten der Nutzer ausschließt.

Die Erfindung schafft auch eine Heizungssteuerung zur Durchführung des erfindungsgemäßen Verfahrens. Die erfindungsgemäße Heizungssteuerung umfasst:
- eine Steuereinheit zur Einstellung wenigstens eines der folgenden Parameter der Heizanlage: Vorlauftemperatur, Durchflussvolumina, Kesselheizintervalle;
- Temperatursensoren zur Erfassung der für die Heizflächen- oder Heizmediumtemperaturen repräsentativen Werte;
- Temperatursensoren zur Erfassung der für die Raumtemperaturen repräsentativen Werte;
- Einrichtungen, insbesondere elektronische Heizkostenverteiler, zur Erfassung der für die Wärmeabgabe repräsentativen Werte; und
- Mittel zur Übertragung der erfassten repräsentativen Werte an die Steuereinheit.

Insbesondere bei der Verwendung von elektronischen Heizkostenverteilern betreffen die repräsentativen Werte für die Wärmeabgabe die relative Wärmeabgabe einer Heizfläche bezogen auf alle Heizflächen des Heizkreises oder wenigstens auf alle vorrangigen Heizflächen des Heizkreises. Diese kann leicht aus den Anzeigefortschritten der beteiligten Heizkostenverteiler errechnet werden.

Vorteilhaft und kostengünstig ist die Verwendung - wenigstens für einige der Heizflächen - von Temperatursensoren, die in die Einrichtung zur Erfassung der für die Wärmeabgabe repräsentativen Werte, insbesondere einen elektronischen Heizkostenverteiler, integriert sind. Da Temperatursensoren zur Erfassung der Heizflächentemperatur und der Raumtemperatur bei herkömmlichen elektronischen Heizkostenverteilern, die nach dem Zweifühler-Messverfahren arbeiten, zwingend vorhanden sind, ist eine Aufrüstung oder zusätzliche Installation von Sensoren nicht erforderlich.

Dennoch können zusätzliche Sensoren vorgesehen werden, die repräsentative Werte für eine Wandtemperatur, Wandfeuchte, Deckentemperatur und/oder Deckenfeuchte erfassen, sowie Mittel zur Übermittlung der erfassten Werte an die Steuereinheit. Diese zusätzlichen Informationen können dann in die Steuerung der Heizanlage sinnvoll einbezogen werden.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 ein Diagramm zum Anteil der einzelnen Heizflächen am Gesamtwärmeenergieverbrauch in einer Liegenschaft; und
- Figur 2 ein Diagramm zum prozentualen Wärmeenergieverbrauch in verschiedenen Wohnräumen einer Liegenschaft.

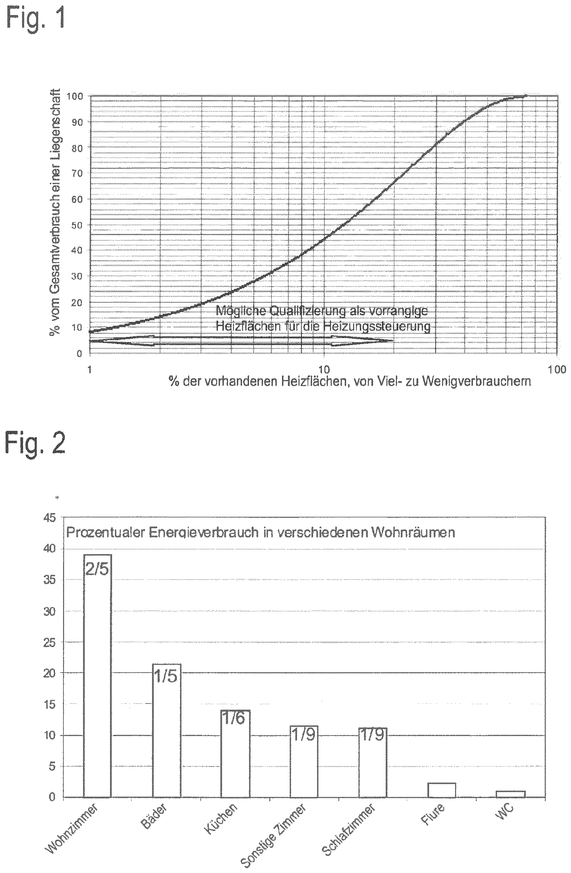

Statistische Untersuchungen haben ergeben, dass im Mittel in Liegenschaften mit gut funktionierenden Heizanlagen nur 10 % der Heizflächen schon annähernd die Hälfte der Wärmeabgabe, 20% der Heizflächen bereits etwa zwei Drittel und 40 % der Heizflächen mehr als 90 % der Wärmeabgabe liefern. Dieser Sachverhalt ist im Diagramm der Figur 1, das den Beitrag einzelner Heizflächen zur Gesamtwärmeabgabe in einer Liegenschaft aufschlüsselt, anhand einer interpolierten Kurve grafisch dargestellt.

Es erscheint demnach gerechtfertigt, aus der Mehrzahl der Heizflächen in einer Wohnung oder Liegenschaft, die dem gleichen Heizkreis angehören, eine Gruppe von Heizflächen, die für den wesentlichen Anteil der Gesamtwärmeabgabe verantwortlich sind, als "vorrangige" Heizflächen zu bezeichnen. Gemäß der Illustration in Figur 1 umfassen erfindungsgemäß die vorrangigen Heizflächen diejenigen 20% der Heizflächen, die von allen Heizflächen des Heizkreises die höchsten Wärmeabgaben liefern und zusammen etwa zwei Drittel der Gesamtwärmeabgabe bestreiten.

Die vorrangigen Heizflächen befinden sich in der Regel an den wenigen Stellen, an denen sich die Nutzer bevorzugt aufhalten, und spielen somit für deren Wahrnehmung des Wohnklimas die wesentliche Rolle. Dieser Zusammenhang wird gestützt durch den im Diagramm der Figur 2 dargestellten prozentualen Energieverbrauch in verschiedenen Wohnräumen. Demnach erfolgt etwa 80 % der Wärmeabgabe in Wohnzimmern, Küchen und Bädern.

Die Grundidee der im Folgenden beschriebenen Steuerung einer Heizanlage besteht darin, den Fokus bei der Wohnraumklimaregelung explizit auf die ausgewählten vorrangigen Heizflächen zu richten mit der Vorgabe, die in deren Nähe üblicherweise vorherrschenden Temperaturbedingungen jederzeit sicher bereitstellen zu können. Nach dieser obersten Prämisse der Anlagensteuerung folgt erst an zweiter Stelle die Bereitstellung eines Algorithmus zur energetischen Optimierung des Anlagenbetriebes.

Die Steuerung der Heizanlage erfolgt in Abhängigkeit vom tatsächlich abgerufenen Bedarf in der von den Nutzern bevorzugten Wohnumgebung, d. h. ausgewählten Räumen mit hohem Energieverbrauch, vorzugsweise Wohnzimmer, Bäder und Küchen. Wenigstens in diesen Räumen sind an den Heizflächen elektronische Heizkostenverteiler installiert, die über eine erweiterte Software- und ggf. Hardwarefunktionalität verfügen. Die elektronischen Heizkostenverteiler übermitteln regelmäßig per Funk die Raumtemperatur und die Heizflächentemperatur, gemessen vom inhärenten Heizflächenfühler bzw. Raumfühler des elektronischen Heizkostenverteilers, sowie die relative Wärmeabgabe (Anzeigefortschritt des elektronischen Heizkostenverteilers) für die jeweilige Heizfläche direkt oder indirekt an eine Steuereinheit der Heizungssteuerung. Sofern entsprechende zusätzliche Sensoren in den Räumen installiert sind, können darüber hinaus auch repräsentative Werte für eine Wandtemperatur (insbesondere einer relativ kalten Wand) und/oder -feuchte sowie eine Deckentemperatur und/oder -feuchte, beispielsweise erfasst durch einen in einem Rauchwarnmelder angeordneten Sensor, an die Steuereinheit übermittelt werden.

Über vorgegebene Zeitintervalle, beispielsweise von der Dauer einer Stunde, werden die Werte gemittelt und ausgewertet. Die Heizungssteuerung wählt nach einem Fuzzy-Logik-Konzept die vorrangigen Heizflächen aus, welche den substantiellen Anteil der abgegebenen Wärme ausmachen. Die Hinzuziehung der relevanten Heizflächen erfolgt also durch eine softwarebasierte Auswahl der Heizflächen, die die höchsten Wärmeabgaben liefern. Im Betrieb lernt die Heizungssteuerung zunächst aus den übermittelten Werten die typische Anzahl und die typischen Zimmertemperaturen der Heizflächen kennen. Ein wesentliches Entscheidungskriterium für die Definition einer Heizfläche als vorrangige Heizfläche ist ein bestimmter mittlerer Mindestenergieverbrauchsanteil.

Die Auswahl der vorrangigen Heizflächen aus der Mehrzahl der Heizflächen eines Heizkreises kann aber auch hardwarebasiert erfolgen, indem nur die Wohnzimmer und Bäder (evtl. auch die Küchen) einer Liegenschaft mit funktionserweiterten elektronischen Heizkostenverteilern und/oder anderen Sensoren ausgerüstet werden. Wenn die Auswahl der vorrangigen Heizflächen nicht (primär) durch die Heizungssteuerung selbst, sondern manuell durch Hardware- oder Softwareausrüstung erfolgt, kann noch folgender Faktor berücksichtigt werden: Küchen enthalten weitere aktive Wärmequellen (Herd, Backofen, etc.), die überwiegend bei Anwesenheit von Personen betrieben werden. Die den Küchen zuzuordnende Heizenergiemenge gestaltet sich daher leicht unterdurchschnittlich verglichen mit deren Anteil am Bestand. Daher kann es ausreichen, wenn sich der Steueralgorithmus für die Heizanlage ausschließlich auf die Heizflächen in Wohnzimmern und Bädern bezieht, d. h. nur diese Heizflächen werden als vorrangig qualifiziert. Für eine solche Auswahl spricht auch, dass die Sensibilität der Nutzer in den besagten Bereichen höher ist, da die Kälteempfindlichkeit bei Bewegungsarmut (im Wohnzimmer) und Entkleidung (im Bad) größer ist.

Die der Heizungssteuerung zur Verfügung gestellten Informationen über den fraktionellen Teilabruf an benötigter Heizenergie dienen zur optimalen relativen Reduktion der von der Heizungsanlage bereitgestellten und im Heizkreis transportierten Wärme unter substantieller Ausnutzung des möglichen Heizmedium-Massenflusses. Die Vorlauftemperatur wird abgesenkt, die Durchflussvolumina werden erhöht, Kesselheizintervalle werden reduziert (bei Rücklaufkontrolle durch die Anlage). Abwärme- und Übergabeverluste, insbesondere im Bereich der Kesselanlage und im nicht bevorzugten Wohnbereich, werden dadurch klein gehalten.

Die Heizungssteuerung regelt dabei nie unter eine garantierte Wohlfühltemperatur für eine vorrangige Heizfläche mit einer entsprechenden Vorlauftemperatur. Die erreichten Heizflächentemperaturen an den vorrangigen Heizflächen werden verglichen. Bei starken negativen Abweichungen der Vorlauftemperatur an wenigen vorrangigen Heizflächen wird auf einen schlechten hydraulischen Abgleich oder eine starke Überdimensionierung der jeweiligen Heizfläche geschlossen.

Die Heizungssteuerung regelt entsprechend dem Versorgungsbedarf der vorrangigen Heizflächen die Vorlauftemperatur soweit herunter, dass bei moderater Auslastung hinsichtlich des Heizmedium-Volumenflusses der Gradient Heizflächentemperatur-Raumtemperatur gehalten werden kann. Der relative Bedarf orientiert sich also nicht am Verbrauch aller vorrangigen Heizflächen bezogen auf einen Temperaturgradienten Heizflächentemperatur-20 °C, sondern bezogen auf den zuvor genannten Gradienten.

Weiterhin erkennt das System auch den zeitweisen "Nichtbetrieb" von ansonsten vorrangigen Heizflächen und kann somit bei längerer Abwesenheit von Nutzern die Gesamtheizleistung entsprechend drosseln.

## Patentansprüche

1. Verfahren zur Steuerung einer Heizungsanlage mit einem Heizkreis, der eine Mehrzahl von in verschiedenen Räumen einer Wohnung oder Liegenschaft angeordneten und von einem Heizmedium durchströmten Heizflächen aufweist, mit folgenden Schritten:
- Auswählen einer Gruppe von vorrangigen Heizflächen aus der Mehrzahl von Heizflächen, wobei in die Auswahl der vorrangigen Heizflächen diejenigen 20% der Heizflächen einbezogen werden, die von allen Heizflächen des Heizkreises die höchsten Wärmeabgaben liefern und zusammen für etwa zwei Drittel der gesamten Wärmeabgabe aller Heizflächen des Heizkreises verantwortlich sind;
- wiederholtes Erfassen von repräsentativen Werten wenigstens für die Heizflächen- oder Heizmediumtemperatur, die Raumtemperatur und die Wärmeabgabe für jede der vorrangigen Heizflächen, wobei die repräsentativen Werten entweder die Heizflächen- oder Heizmediumtemperatur, die Raumtemperatur und die (relative) Wärmeabgabe selbst, oder Werte sind, die direkt in Zusammenhang mit diesen Größen stehen und eindeutige Rückschlüsse auf diese Größen zulassen; und
- Einstellen wenigstens eines der folgenden Parameter der Heizungsanlage basierend auf den erfassten repräsentativen Werten: Vorlauftemperatur des Heizmediums, Durchflussvolumina, Kesselheizintervalle.

2. Verfahren nach Anspruch 1, **dadurch gekennzeichnet, dass** ausschließlich die repräsentativen Werte der vorrangigen Heizflächen für das Einstellen der Parameter herangezogen werden.

3. Verfahren nach Anspruch 1 oder 2, **dadurch gekennzeichnet, dass** das Auswählen der Gruppe von vorrangigen Heizflächen auf Fuzzy-Logik basiert.

4. Verfahren nach einem der vorhergehenden Ansprüche, **dadurch gekennzeichnet, dass** bei der Auswahl der Gruppe von vorrangigen Heizflächen eine gemittelte Wärmeabgabe der Heizflächen berücksichtigt wird.

5. Verfahren nach einem der vorhergehenden Ansprüche, **dadurch gekennzeichnet, dass** bezüglich der Räume, in denen sich die vorrangigen Heizflächen befinden, aus den erfassten repräsentativen Werten eine Mindestraumtemperatur bestimmt wird und die Vorlauftemperatur und/oder die Durchflussvolumina und/oder die Kesselheizintervalle innerhalb eines regulären Betriebszeitraums der Heizanlage nur so weit reduziert werden, dass die Mindestraumtemperatur in diesem Betriebszeitraum jederzeit erreicht und gehalten werden kann.

6. Heizungssteuerung zur Durchführung des Verfahrens nach einem der vorhergehenden Ansprüche, mit
einer Steuereinheit zur Einstellung wenigstens eines der folgenden Parameter der Heizanlage: Vorlauftemperatur, Durchflussvolumina, Kesselheizintervalle;
Temperatursensoren zur Erfassung der für die Heizflächen- oder Heizmediumtemperaturen repräsentativen Werte;
Temperatursensoren zur Erfassung der für die Raumtemperaturen repräsentativen Werte;
Einrichtungen zur Erfassung der für die Wärmeabgabe repräsentativen Werte; und
Mitteln zur Übertragung der erfassten repräsentativen Werte an die Steuereinheit.

7. Heizungssteuerung nach Anspruch 6, **dadurch gekennzeichnet, dass** die Einrichtungen zur Erfassung der für die Wärmeabgabe repräsentativen Werte elektronische Heizkostenverteiler sind.

8. Heizungssteuerung nach Anspruch 6 oder 7, **dadurch gekennzeichnet, dass** wenigstens für einige der Heizflächen die Temperatursensoren in die Einrichtung zur Erfassung der für die Wärmeabgabe repräsentativen Werte integriert sind.

9. Heizungssteuerung nach einem der Ansprüche 6 bis 8, **gekennzeichnet durch** zusätzliche Sensoren, die repräsentative Werte für wenigstens eine der folgenden Größen erfassen: Wandtemperatur, Wandfeuchte, Deckentemperatur, Deckenfeuchte; sowie Mittel zur Übermittlung der erfassten Werte an die Steuereinheit.

## Claims

1. A method of controlling a heating system having a heating circuit which includes a plurality of heating surfaces that are arranged in different rooms of an apartment or property and through which a heating medium flows, comprising the following steps:
- selecting a group of high-priority heating surfaces from the plurality of heating surfaces, with those 20% of the heating surfaces being included in the selection of high-priority heating surfaces that provide the highest heat emissions of all heating surfaces of the heating circuit and together are responsible for about two thirds of the total heat emission of all heating surfaces of the heating circuit;
- repeatedly detecting representative values at least for the heating surface temperature or heating medium temperature, the room temperature and the heat emission for each of the high-priority heating surfaces, with the representative values being either the heating surface temperature or heating medium temperature, the room temperature and the (relative) heat emission itself, or values which are directly related to these quantities and allow unequivocal conclusions to be drawn about these quantities; and
- setting at least one of the following parameters of the heating system based on the representative values detected: supply temperature of the heating medium, flow volumes, boiler heating intervals.

2. The method according to claim 1, **characterized in that** for the setting of the parameters, exclusively the representative values of the high-priority heating surfaces are made use of.

3. The method according to claim 1 or 2, **characterized in that** selecting of the group of high-priority heating surfaces is based on fuzzy logic.

4. The method according to any of the preceding claims, **characterized in that** in selecting the group of high-priority heating surfaces, an averaged heat emission of the heating surfaces is taken into account.

5. The method according to any of the preceding claims, **characterized in that** with respect to the rooms in which the high-priority heating surfaces are located, a minimum room temperature is determined from the representative values detected, and the supply temperature and/or the flow volumes and/or the boiler heating intervals are reduced within a regular operating period of the heating system only to such an extent that the minimum room temperature can be reached and kept up at any time in this operating period.

6. A heating control system for carrying out the method according to any of the preceding claims, comprising
a control unit for setting at least one of the following parameters of the heating system: supply temperature, flow volumes, boiler heating intervals;
temperature sensors for detecting the values representative of the heating surface temperatures or heating medium temperatures;
temperature sensors for detecting the values representative of the room temperatures;
devices for detecting the values representative of the heat emission; and means for transferring the representative values detected to the control unit.

7. The heating control system according to claim 6, **characterized in that** the devices for detecting the values representative of the heat emission are electronic heat cost allocators.

8. The heating control system according to claim 6 or 7, **characterized in that** at least for some of the heating surfaces, the temperature sensors are integrated in the device for detecting the values representative of the heat emission.

9. The heating control system according to any of claims 6 to 8, **characterized by** additional sensors which detect representative values for at least one of the following quantities: wall temperature, wall moisture, ceiling temperature, ceiling moisture; as well as means for transmitting the values detected to the control unit.

## Revendications

1. Procédé de commande d'une installation de chauffage qui comporte un circuit de chauffage présentant une pluralité de surfaces de chauffage qui sont agencées dans différentes pièces d'un appartement ou d'un bien foncier et qui sont traversées par un milieu chauffant, comprenant les étapes suivantes :
- la sélection d'un groupe de surfaces de chauffage prioritaires parmi la pluralité de surfaces de chauffage, les 20% des surfaces de chauffage étant inclues dans le choix des surfaces de chauffage prioritaires qui, parmi l'ensemble des surfaces de chauffage du circuit de chauffage, fournissent les dégagements de chaleur les plus élevés et qui ensemble sont responsables d'environ deux tiers du dégagement de chaleur total de l'ensemble des surfaces de chauffage du circuit de chauffage ;
- la saisie répétée de valeurs représentatives au moins pour la température de surface de chauffage ou de milieu chauffant, la température ambiante et le dégagement de chaleur pour chacune des surfaces de chauffage prioritaires, les valeurs représentatives étant soit la température de surface de chauffage ou de milieu chauffant, la température ambiante et le dégagement de chaleur (relatif) lui-même, soit des valeurs qui sont directement en relation avec ces grandeurs et qui permettent des conclusions univoques concernant ces grandeurs ; et
- le réglage d'au moins l'un des paramètres suivants de l'installation de chauffage sur la base des valeurs représentatives saisies : température aller du milieu chauffant, volumes d'écoulement, intervalles de chauffage de chaudière.

2. Procédé selon la revendication 1, **caractérisé en ce que** seuls les valeurs représentatives des surfaces de chauffage prioritaires sont prises en compte pour le réglage des paramètres.

3. Procédé selon la revendication 1 ou 2, **caractérisé en ce que** la sélection du groupe de surfaces de chauffage prioritaires est basée sur une logique floue.

4. Procédé selon l'une des revendications précédentes, **caractérisé en ce que** lors de la sélection du groupe de surfaces de chauffage prioritaires, un dégagement de chaleur moyen des surfaces de chauffage est pris en compte.

5. Procédé selon l'une des revendications précédentes, **caractérisé en ce que** concernant les pièces dans lesquelles se trouvent les surfaces de chauffage prioritaires, une température ambiante minimum est déterminée à partir des valeurs représentatives saisies et la température aller et/ou les volumes d'écoulement et/ou les intervalles de chauffage de chaudière sont abaissés dans une période de fonctionnement réglementaire de l'installation de chauffage uniquement jusqu'à ce qu'il soit à tout moment possible d'atteindre et de maintenir la température ambiante minimum dans cette période de fonctionnement.

6. Commande de chauffage pour l'exécution du procédé selon l'une des revendications précédentes, comportant :
une unité de commande pour le réglage d'au moins l'un des paramètres suivants de l'installation de chauffage : température aller, volumes d'écoulement, intervalles de chauffage de chaudière ;
des capteurs de température pour la saisie des valeurs représentatives des températures de surface de chauffage ou de milieu chauffant ;
des capteurs de température pour la saisie des valeurs représentatives des températures ambiantes ;
des dispositifs pour la saisie des valeurs représentatives du dégagement de chaleur ; et
des moyens pour la transmission des valeurs représentatives saisies à l'unité de commande.

7. Commande de chauffage selon la revendication 6, **caractérisée en ce que** les dispositifs pour la saisie des valeurs représentatives du dégagement de chaleur sont des répartiteurs de frais de chauffage électroniques.

8. Commande de chauffage selon la revendication 6 ou 7, **caractérisée en ce que** les capteurs de température sont intégrés au dispositif de saisie des valeurs représentatives du dégagement de chaleur au moins pour certaines des surfaces de chauffage.

9. Commande de chauffage selon l'une des revendications 6 à 8, **caractérisée par** des capteurs additionnels qui saisissent des valeurs représentatives d'au moins l'une des grandeurs suivantes : température de paroi, humidité de paroi, température de plafond, humidité de plafond ; ainsi que par des moyens de transmission des valeurs saisies à l'unité de commande.
